# EUROPEAN PATENT SPECIFICATION

(11) **EP 2 106 122 B1**
(45) Date of publication and mention of the grant of the patent: **22.01.2014**
(21) Application number: 08021746.6
(22) Date of filing: 15.12.2008
(51) Int. Cl.: H04N 5/14, G06T 7/20, H04N 7/26

(54) **Motion estimating device**
Bewegungsschätzungsvorrichtung
Dispositif d'évaluation des mouvements

(30) Priority: 28.03.2008 JP 2008086890
(43) Date of publication of application: 30.09.2009
(73) Proprietor: Kabushiki Kaisha Toshiba, Minato-ku Tokyo (JP)
(72) Inventor: Hirayama, Keiko, Minato-ku Tokyo (JP); Yamauchi, Himio, Minato-ku Tokyo (JP)
(74) Representative: HOFFMANN EITLE

(56) References cited:
- US-A1- 2002 114 394
- US-A1- 2003 190 059
- US-A1- 2005 053 291
- US-A1- 2006 088 191

## Description

### CROSS REFERENCE TO RELATED APPLICATION(S)

The present disclosure relates to the subject matters contained in Japanese Patent Application No. 2008-086890 filed on March 28, 2008.

### FIELD

The present invention relates to a motion estimating device that estimates motion of an object included in an image.

### BACKGROUND

Motion estimating devices estimates motion of an object included in an image by detecting, as a motion vector, motion of the object in the image. The motion vector is detected by a series of processes including: dividing each of two image frames, which are consecutive over time, into plural small regions (pixel blocks); finding a pair of small regions that are highest in correlation among the pairs of small regions; and generating the motion vector that represents a displacement between the pair of small regions.

An example of a method for detecting a motion vector in such conventional devices is disclosed in JP-A-2000-224593. In the method disclosed in the publication, a region dividing unit compares the absolute value of a difference between motion compensation frames of a decoding subject small block with a threshold value on a pixel-by-pixel basis and dividing the decoding subject small block into a first region consisting of smaller-than-threshold-value pixels and a second region consisting of larger-than-threshold-value pixels. An interpolation value calculating unit forms an interpolation frame by averaging the pixel values of the first region and corresponding pixel values of a reference block. The interpolation value calculating unit determines shielding/appearance of the second region in the decoding subject frame, and employs one of the decoding subject block or a corresponding region of the reference block as a base region and employs a frame to which the base region does not belong as a re-search reference frame. Then, the interpolation value calculating unit generates an interpolation frame by copying, to a second region of the interpolation frame, pixel values of the re-search reference frame that are determined from 1/2 of a second motion vector calculated between the base region and the re-search reference frame.

However, in the method described above, in frame interpolation for an image that is close to a still image of a fine repetitive pattern of noise or very small motion, vector weighting is performed to prevent variation between vectors. On the other hand, in frame interpolation for an image that is close to a moving image such as a text scroll image, the interpolation involves a vector that is close to the zero vector. This may cause a vector detection error.

US 2003/0190059 A1 relates to automatic setting of optimal search window dimensions for motion estimation. It provides a method of estimating a motion field of a sequence of digital pictures that allows the setting of optimal dimensions of a search window and optimal length of a string used to encode motion vectors. The method includes subdividing a current picture to examine in an integer number of macroblocks, for each macroblock of the current picture determining a search window centered on a macroblock of a preceding picture placed in the same position of the considered macroblock of the current picture, and carrying out a motion estimation. US 2002/0114394 A1 relates to a system and method for motion vector generation and analysis of digital video clips. It is described how to efficiently compute motion vectors and motion trajectories of identified video objects for facilitating various commonly encountered visual applications. A function is described which may be used for evaluating the maximum of the length of motion vectors or the area enclosed by motion vectors.

US 2006/0088191 A1 relates to video content understanding through real time video motion analysis. Methods and systems for camera motion analysis and moving object analysis and methods of extracting semantics mainly from camera motion parameters in videos and video segments without shot changes are described. It is described that a motion vector determination technique may provide erroneous results due to random noise, which effects a very small variance of the distortion distribution across a search range. Such small variances may occur for blocks in uniform portions of frames, e.g. cloudless sky. Hence, motion vectors are filtered by determining motion vectors for a plurality of blocks across an image and then removing outliers.

US 2005/0053291 A1 relates to a frame interpolation method and apparatus, and image display system. The method comprises searching a motion vector from different pairs of blocks on a first and second reference image symmetrically, extracting a first and second image block, respectively, determining a region determination threshold, extracting a first pixel region and obtaining a pixel value of a second pixel region.

### SUMMARY

One of objects of the present invention is to provide a motion estimating device capable of detecting a motion vector with higher accuracy in both of frame interpolation for a still image and that for a moving image.

This is achieved by the independent claims. Advantageous embodiments are described in the dependent claims.

According to a first aspect, there is provided a motion estimating device including: a vector search module that searches for a motion vector to be used for estimating motion of an object included in images based on similarities between pixel blocks included in the respective images, each of images being one of an image frame and an image field; a motion block detecting module that counts the number of motion blocks in the pixel blocks based on the similarities between the pixel blocks in the respective images; a limit value calculating module that calculates a limit value to be a larger value as the number of motion blocks detected by the motion block detecting module is larger; and a limiter module that prohibits outputting the motion vector detected by the vector search module when the detected motion vector is larger than the limit value calculated by the limit value calculating module.

According to a second aspect, there is provided a method for estimating motion of an object included in images, the method including: searching for a motion vector to be used for estimating the motion of the object included in images based on similarities between pixel blocks included in the respective images, each of images being one of an image frame and an image field; detecting the number of motion blocks in the pixel blocks based on the similarities between the pixel blocks in the respective images; calculating a limit value to be a larger value as the number of the counted motion blocks; and prohibiting to output the motion vector detected by the vector search module when the detected motion vector is larger than the calculated limit value.

According to a third aspect, there is provided a motion estimating device including: a vector search module that searches for a motion vector to be used for estimating motion of an object included in images based on similarities between pixel blocks included in the respective images, each of images being one of an image frame and an image field; a vector search range setting module that sets, in the images, a search range to be employed when the vector search module searches for a motion vector; a motion block detecting module that detects the number of motion blocks in the pixel blocks based on the similarities between the pixel blocks in the images; and a vector search range calculating module that calculates the search range for the vector search range setting module based on the number of motion blocks detected by the motion block detecting module.

### BRIEF DESCRIPTION OF THE DRAWINGS

A general configuration that implements the various feature of the invention will be described with reference to the drawings. The drawings and the associated descriptions are provided to illustrate embodiments of the invention and not to limit the scope of the invention.
Fig. 1 is a block diagram showing a configuration of an interpolation frame generating device incorporating a motion estimating device according to a first embodiment of the present invention.
Fig. 2 is a block diagram showing the configuration of a motion vector search module shown in Fig. 1.
Fig. 3 is a graph showing a relationship between the limit value and the number of motion blocks.
Fig. 4 is a graph showing the relationship between the limit value and the number of motion blocks in detail.
Fig. 5 is a block diagram showing the configuration of a motion vector search module according to a second embodiment of the invention.
Fig. 6 is a block diagram showing the configuration of a conventional motion vector search module.

### DETAILED DESCRIPTION OF THE EMBODIMENTS

Hereinafter, embodiments of the invention will be described. In the following description, the same or similar components will be referenced by the same reference numerals, and detailed description thereof will be omitted.

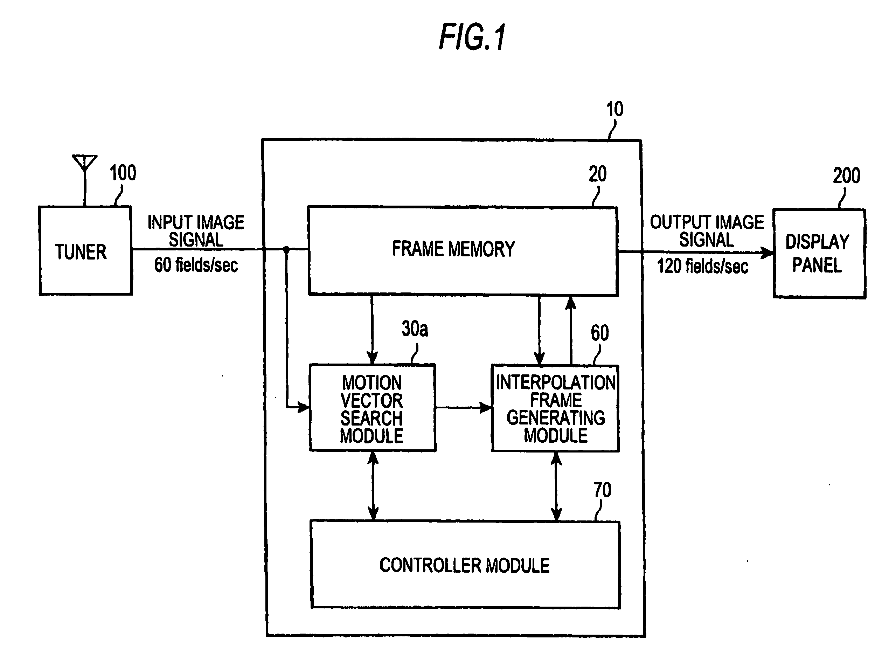

A motion estimating device according to a first embodiment of the present invention will be described in detail with reference to the drawings. The motion estimating device according to the first embodiment of the invention is implemented as a motion vector search module 30a in an interpolation frame generating device 10 shown in Fig. 1. Accordingly, the interpolation frame generating device 10 will be described.

Fig. 1 is a block diagram showing a configuration of the interpolation frame generating device 10. The interpolation frame generating device 10 is provided in an apparatus having an image display function such a TV receiver, a personal computer, or a cell phone.

The interpolation frame generating device 10 is configured so as to generate, from plural image frames that constitute an input image signal (60 frames/sec) that is input via a tuner 100, an interpolation frame to be interpolated between the plural image frames and to output, to a display panel (image display means) 200, an output image signal (120 frames/sec) in which the generated interpolation frame is inserted.

The interpolation frame generating device 10 is equipped with a frame memory 20, a motion vector search module 30a, an interpolation frame generating module (interpolation image generating module) 60, and a controller module 70. The display panel 200 (e.g., a liquid crystal display panel) is connected to the interpolation frame generating device 10.

The frame memory 20 stores an input image signal on an image frame basis. The motion vector search module 30a detects a motion vector by performing block matching on a current frame which is an image frame that is directly input without being input to the frame memory 20 and a preceding frame which is an image frame stored in the frame memory 20, and outputs the detected motion vector to the interpolation frame generating module 60. The configuration and the operation of the motion vector search module 30a will be described later in detail.

The interpolation frame generating module 60 generates an interpolation frame based on the current frame that is directly input without being input to the frame memory 20, the preceding frame stored in the frame memory 20, and the motion vector detected by the motion vector search module 30a, and stores the generated interpolation frame in the frame memory 20.

The interpolation frame is a frame to be interpolated between the current frame that is directly input without being input to the frame memory 20 and the preceding frame stored in the frame memory 20.

The interpolation frame generating module 60 calculates a temporal distance between a pixel block of the current frame and that of the preceding frame and reduces the motion vector detected by the motion vector search module 30a according to the ratio of a temporal distance between the preceding frame and the interpolation frame to the calculated temporal distance. The interpolation frame generating module 60 generates a pixel block to become part of an interpolation frame by displacing the corresponding pixel block of the preceding frame based on the reduced motion vector. The interpolation frame generating module 60 generates an interpolation frame by repeat performing the above process for each pixel block of the preceding frame.

The controller module 70 controls the generation of an interpolation frame by, for example, outputting a block timing signal to the motion vector search module 30a.

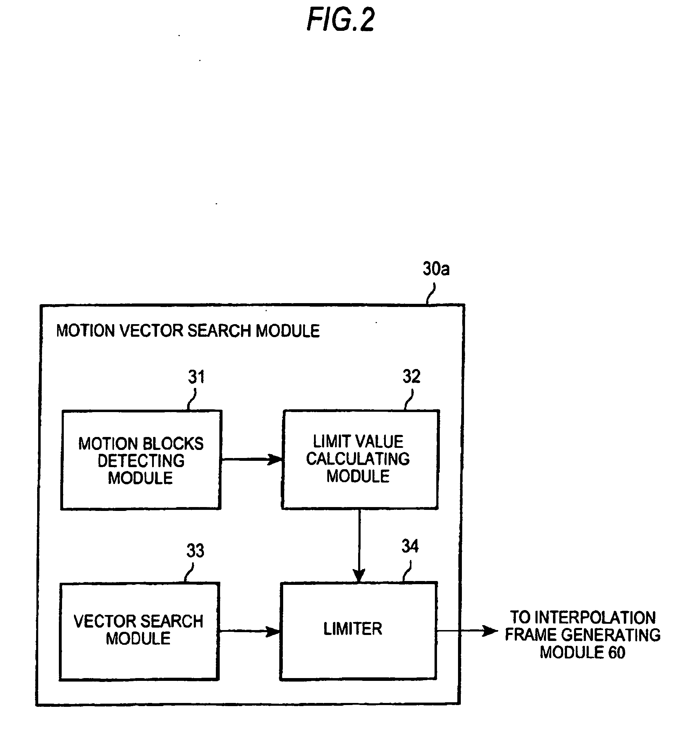

Next, the configuration of the motion vector search module 30a will be described with reference to Fig. 2. Fig. 2 is a block diagram showing the configuration of the motion vector search module 30a. As shown in Fig. 2, the motion vector search module 30a is equipped with a motion block detecting module 31, a limit value calculating module 32, a vector search module 33, and a limiter 34.

The motion block detecting module 31 detects the number of motion blocks (i.e., blocks having a vector that is determined indicative of motion) from all blocks in each frame. The motion block detecting module 31 detects the number of motion blocks by performing block matching on two pixel blocks included in a current frame that is directly input without being input to the frame memory 20 and a preceding frame that is input from the frame memory 20, respectively, thereby detecting similarities between pixel blocks.

The limit value calculating module 32 calculates a limit value to be used in the limiter 34 based on the number of motion blocks detected by the motion block detecting module 31. The limit value calculating module 32 produces a larger limit value for the limiter 34 as the number of motion blocks detected by the motion block detecting module 31 increases. A specific operation of the limit value calculating module 32 will be described later.

The vector search module 33 searches for a motion vector to be used for estimating motion of an object included in frames by performing block matching on two pixel blocks included in a current frame that is directly input without being input to the frame memory 20 and a preceding frame that is input from the frame memory 20, respectively, and thereby detecting similarities between pixel blocks.

The vector search module 33 performs block matching on two pixel blocks included in a current frame that is directly input without being input to the frame memory 20 and a preceding frame that is input from the frame memory 20, respectively, determines similarity data A₁-A_{N} in n directions using SAD (sum of absolute differences) between pixel blocks, selects a vector indicating a displacement between pixel blocks having highest correlation based on the similarity data A₁-A_{N}, and searches for a motion vector based on the selected vector.

The limiter 34 permits output of the motion vector found by the vector search module 33 when the motion vector is equal to or smaller than the limit value. A specific operation of the limiter 34 will be described below.

The operation of the interpolation frame generating device 10 will be described below. The motion block detecting module 31 of the motion vector search module 30a detects the number of motion blocks (i.e., blocks having a vector that is determined indicative of motion) by performing block matching on two pixel blocks included in a current frame that is input from the tuner 100 directly (i.e., without passage of the frame memory 20) and a preceding frame that is input from the frame memory 20, respectively, and thereby detecting similarities between pixel blocks.

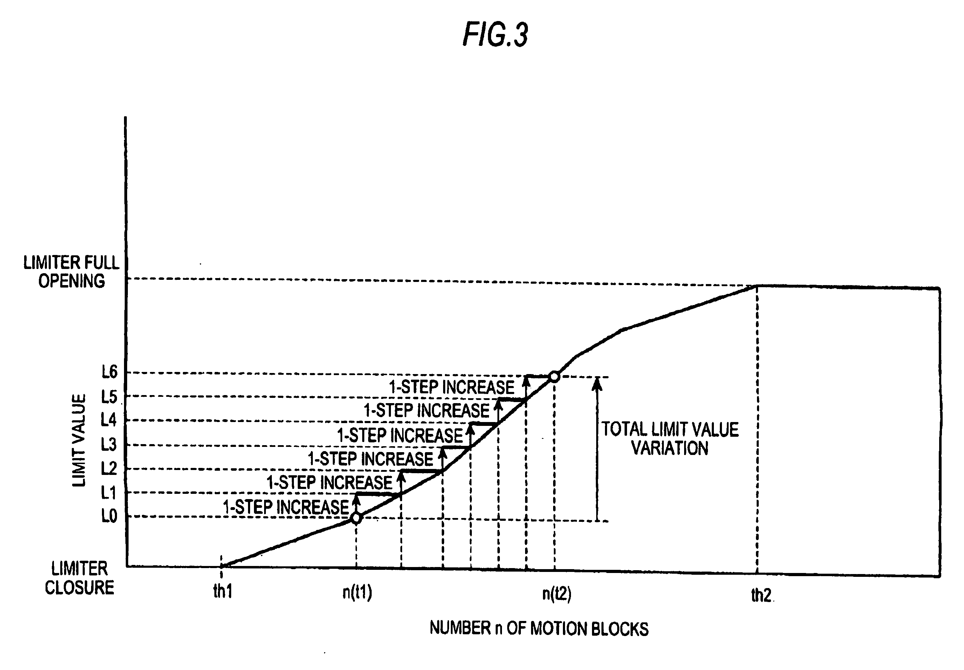

The limit value calculating module 32 of the motion vector search module 30a calculates a limit value based on the number of motion blocks detected by the motion block detecting module 31. Fig. 3 is a graph showing a relationship between the limit value and the number of motion blocks. As shown in Fig. 3, the limit value calculating module 32 calculates a limit value as a vector-valued function of the number n of motion blocks that is in a range of (first threshold value th1) < (number n of motion blocks) < (second threshold value th2). In a still image range of 0 < (number n of motion blocks) ≤ (first threshold value th1), the limit value calculating module 32 produces such a limit value as to cause the limiter 34 to prohibit output of every motion vector (limiter closure). On the other hand, in a moving image range of (second threshold value th2) ≤ (number n of motion blocks), the limit value calculating module 32 produces such a limit value as to cause the limiter 34 to permit output of every motion vector (limiter full opening).

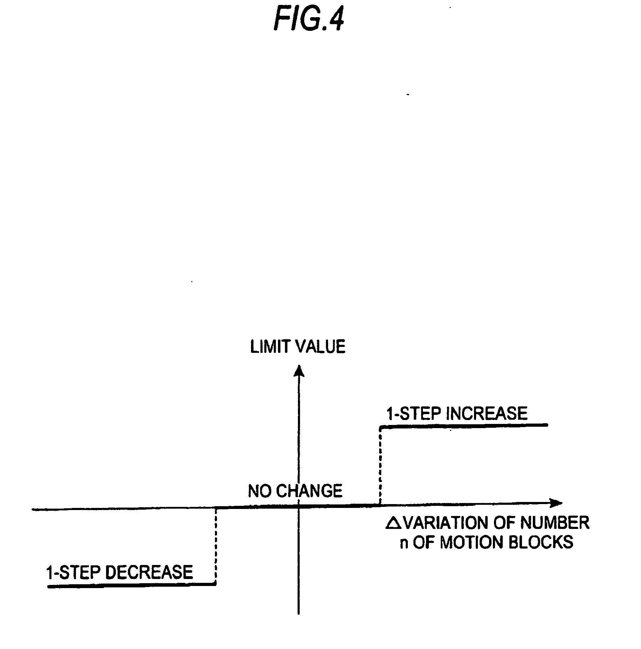

In the range of (first threshold value th1) < (number n of motion blocks) < (second threshold value th2), the limit value calculating module 32 calculates a limit value as a stepped vector-valued function of the number n of motion blocks. Assume a case that the number n of motion blocks increases from time t1 to time t2 and that a limit value L0(t1) is given to a number n(t1) of motion blocks at time t1 and a limit value L6(t2) is given to a number n(t2) of motion blocks at time t2. In this case, as shown in Figs. 3 and 4, the limit value calculating module 32 does not change the limit value from L0(t1) to L6(t2) at one time. Instead, the limit value calculating module 32 changes the limit value one step at a time (L0 -> L1 -> L2 -> L3 -> L4 -> L5 -> L6) by adding a fixed step value to the current limit value as the frame proceeds. When the number n of motion blocks decreases, likewise, the limit value calculating module 32 calculates a new limit value by subtracting the fixed step value from the current limit value as the frame proceeds.

To reduce the resources that are necessary for the calculation of a limit value, the limit value calculating module 32 may calculate a limit value as to a linear vector-valued function of the number n of motion blocks.

The vector search module 33 of the motion vector search module 30a searches for a motion vector by performing block matching on two pixel blocks included in a current frame that is directly input without being input to the frame memory 20 and a preceding frame that is input from the frame memory 20, respectively, and thereby detecting similarities between pixel blocks.

The limiter 34 of the motion vector search module 30a prohibits output, to the interpolation frame generating module 60, of a motion vector that has been found by the vector search module 33 to be larger than the limit value calculated by the limit value calculating module 32 based on the number n of motion blocks, and permits output of a motion vector that is smaller than or equal to the limit value.

In comparing the motion vector and the limit value, the limiter 34 determines whether the motion vector is larger than the limit value by comparing each of horizontal component (X component) and vertical component (Y component) of the motion vector and the limit value. And, when both of the horizontal component and the vertical component of the motion vector is larger than the horizontal component and the vertical component of the limit value, the limiter 34 prohibits outputting the motion vector.

The interpolation frame generating module 60 generates an interpolation frame based on the current frame that is directly input without being input to the frame memory 20, the preceding frame stored in the frame memory 20, and the motion vector detected by the motion vector search module 30a, and stores the generated interpolation frame in the frame memory 20.

The display panel 200 displays an output image signal (120 frames/sec) that is output from the frame memory 20 of the interpolation frame generating device 10.

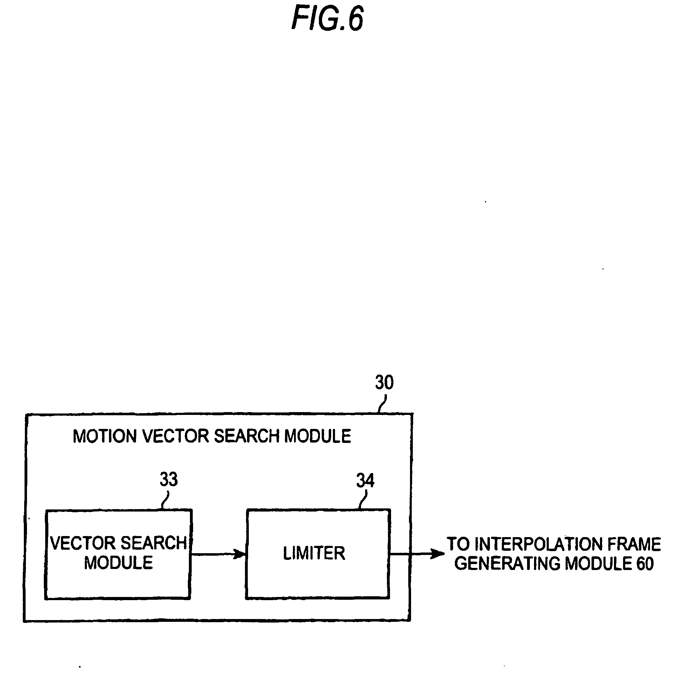

In the first embodiment, in contrast to a conventional method shown in Fig. 6 in which output of a motion vector found by a vector search module 33 is limited according to a fixed limit value, the limiter 34 prohibits output of a motion vector that has been found by the vector search module 33, the motion vector that is larger than a limit value that has been calculated by the limit value calculating module 32 based on the number n of motion blocks detected by the motion block detecting module 31. Since the limit value of the limiter 34 can be adjusted adaptively according to the number of motion blocks per one frame of an input image, a motion vector can be detected with higher accuracy in both of frame interpolation for a still image and that for a moving image.

In the first embodiment, in the still image range of O < (number n of motion blocks) ≤ (first threshold value th), the limit value calculating module 32 produces such a limit value as to cause the limiter 34 to prohibit output of every motion vector (limiter closure). This makes it possible to eliminate influence of noise etc. in the case of a still image. On the other hand, in the moving image range of (second threshold value th2) ≤ (number n of motion blocks), the limit value calculating module 32 produces such a limit value as to cause the limiter 34 to permit output of every motion vector (limiter full opening). As a result, for a frame that clearly belongs to a moving image, every motion vector in a search range can be output to the interpolation frame generating module 60.

Furthermore, in the first embodiment, in the range of (first threshold value th1) < (number n of motion blocks) < (second threshold value th2), the limit value calculating module 32 calculates a limit value as a stepped vector-valued function of the number n of motion blocks. This makes it possible to calculate a limit value by such a method that the consumption of resources is relatively low.

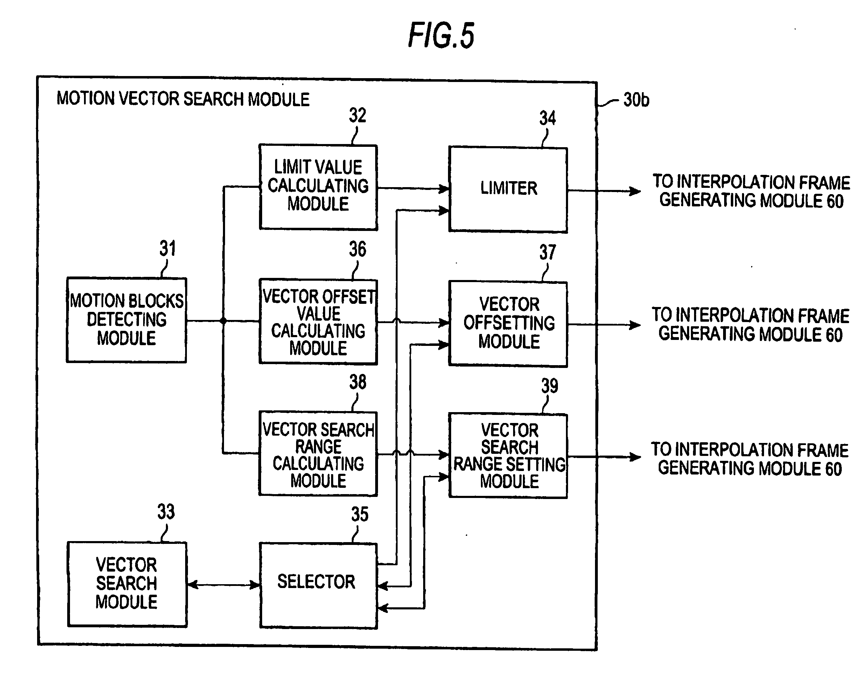

Next, a second embodiment of the invention will be described below. Fig. 5 is a block diagram showing a configuration of a motion vector search module 30b according to the second embodiment. In the second embodiment, limit value calculation, weighting of vector search (vector offsetting), or setting of a vector search range is performed based on the number n of motion block detected by a motion block detecting module 31.

As shown in Fig. 5, in a motion vector search module 30b according to this embodiment, a vector offset value calculating module 36 and a vector search range calculating module 38, in addition to a limit value calculating module 32, are connected to the motion block detecting module 31. The vector offset value calculating module 36 is connected to a vector offsetting module 37. The vector search range calculating module 38 is connected to a vector search range setting module 39. A vector search module 33 is selectively connected to the limiter 34, the vector offsetting module 37, or the vector search range setting module 39 via a selector 35. The limiter 34, the vector offsetting module 37, and the vector search range setting module 39 output a motion vector to the interpolation frame generating module 60.

The vector offset value calculating module 36 is to vary vector offset values of the vector offsetting module 37 based on the number of motion blocks detected by the motion block detecting module 31. The vector offset value calculating module 36 adjusts the vector offset values K₁-K_{N} based on the number of motion blocks detected by the motion block detecting module 31 for similarity data A₁-A_{N} calculated by the vector search module 33. For example, the vector offset value calculating module 36 can set the vector offset values smaller for vectors in the vicinity of the zero vector and larger for vectors that are distant from the zero vector as the number n of motion blocks decreases.

The vector offsetting module 37 is to weight, according to vector offset values, similarities between pixel blocks in a current frame and a preceding frame so that an arbitrary motion vector is found more easily when the vector search module 33 searches for a motion vector. The vector offsetting module 37 weights similarity data A₁-A_{N} calculated by the vector search module 33 by multiplying them by vector offset values K₁-K_{N} calculated by the vector offset value calculating module 36, respectively.

The vector search range calculating module 38 is to calculate, based on the number n of motion blocks detected by the motion block detecting module 31, a vector search range to be set by the vector search range setting module 39. For example, the vector search range calculating module 38 can produce a narrower vector search range as the number n of motion blocks decreases. The vector search range setting module 39 is to set a search range of a current frame and a preceding frame to be employed when the vector search module 33 searches for a motion vector.

The operation of the motion vector search module 30b according to the second embodiment will be described below. The motion block detecting module 31 detects the number n of motion blocks in the same manner as in the first embodiment.

Where the vector search module 33 is connected to the vector offsetting module 37 by the selector 35, the vector offset value calculating module 36 calculates vector offset values K₁-K_{N} based on the number n of motion blocks detected by the motion block detecting module 31. The vector offsetting module 37 weights similarities by multiplying similarity data A₁-A_{N} calculated by the vector search module 33 by the vector offset values K₁-K_{N} calculated by the vector offset value calculating module 36, respectively. The vector search module 33 selects a vector indicating a displacement between pixel blocks having highest correlation based on the similarity data multiplied by the vector offset values K₁-K_{N}, that is, K₁•A₁-K_{N}•A_{N}, and searches for a motion vector based on the selected vector.

Where the vector search module 33 is connected to the vector search range setting module 39 by the selector 35, the vector search range calculating module 38 calculates a vector search range based on the number n of motion blocks detected by the motion block detecting module 31. The vector search module 33 searches for a motion vector in a vector search range that is set based on the search range calculated by the vector search range calculating module 38.

Where the vector search module 33 is connected to the limiter 34 by the selector 35, the motion vector search module 30b operates in the same manner as in the first embodiment.

The second embodiment makes it possible to detect a motion vector with higher accuracy because vector weighting, limit value calculation, or vector search range setting is adjusted adaptively according to the number of motion blocks per one frame of an input image.

The embodiments of the invention have been described above. However, the invention is not limited to the embodiments described in the above, and various modifications are possible. For example, although in the embodiments a motion vector is searched for and the number of motion blocks is detected based on similarities between pixel blocks of image frames, in the invention a motion vector may be searched for and the number of motion blocks may be detected based on similarities between pixel blocks of image frames.

## Claims

1. A motion estimating device comprising:
a vector search module (33) that searches for motion vectors to be used for estimating motion of an object included in a current and a preceding image based on similarities between pixel blocks included in the images, each of said images being one of an image frame and an image field;
a motion block detecting module (31) that detects the number of motion blocks in the pixel blocks based on the similarities between the pixel blocks of said images;
a limit value calculating module (32) that calculates a limit value such that it increases as the number of motion blocks detected by the motion block detecting module increases; and
a limiter module (34) that prohibits outputting the motion vector detected by the vector search module (33) when the detected motion vector is larger than the limit value calculated by the limit value calculating module (32).

2. The device according to claim 1, wherein the limit value calculating module (32) calculates the limit value as a function of the number n of motion blocks in a range of first threshold value (th1) < n < second threshold value th2).

3. The motion estimating device according to claim 2, wherein the limit value calculating module (32) calculates the function so that it:
prohibits output of every motion vector when n satisfies a relationship n <= thl; and
permits output of every motion vector when n satisfies a relationship n <= th2.

4. The device according to claim 2, wherein the function is a linear function of n.

5. The device according to claim 2, wherein the function is a nonlinear function of n.

6. The device according to claim 5, wherein the function is a stepped function of n.

7. The device according to claim 1 further comprising:
an interpolation image generating module (60) that generates an interpolation image to be inserted between the images based on the motion vector that is output from the limiter module (34); and
an image display device (200) that displays a video image based on an output image signal which includes the interpolation image generated by the interpolation image generating module.

8. The device according to claim 1 further comprising:
a vector search range setting module (39) that sets, in the images, a search range to be employed when the vector search module (33) searches for a motion vector; and
a vector search range calculating module (38) that calculates the search range for the vector search range setting module (39) based on the number of motion blocks detected by the motion block detecting module.

9. A method for estimating motion of an object included in images, the method comprising:
searching for motion vectors to be used for estimating the motion of an object included in a current and a preceding image based on similarities between pixel blocks included in the images, each of said images being one of an image frame and an image field;
detecting the number of motion blocks in the pixel blocks based on the similarities between the pixel blocks in the images;
calculating a limit value such that it increases as the number of the motion blocks detected by the motion block detecting step increases; and
prohibiting to output the motion vector detected by the vector search step when the detected motion vector is larger than the calculated limit value.

## Patentansprüche

1. Bewegungsschätzungsvorrichtung, umfassend:
ein Vektorsuchmodul (33), das nach Bewegungsvektoren sucht, die verwendet werden sollen, um eine Bewegung eines Objekts zu schätzen, das in einem derzeitigen und einem vorherigen Bild enthalten ist, basierend auf Ähnlichkeiten zwischen Pixelblöcken, die in den Bildern enthalten sind, wobei jedes der Bilder eines aus einem Bild-Frame und einem Bild-Feld ist;
ein Bewegungsblock-Erfassungsmodul (31), das die Zahl von Bewegungsblöcken in den Pixelblöcken erfasst, basierend auf den Ähnlichkeiten zwischen den Pixelblöcken der Bilder;
ein Grenzwert-Berechnungsmodul (32), das einen Grenzwert berechnet, so dass sich dieser erhöht, wenn sich die Zahl von Bewegungsblöcken, die von dem Bewegungsblock-Erfassungsmodul erfasst werden, erhöht; und
ein Begrenzungsmodul (34), das ein Ausgeben des Bewegungsvektors verbietet, der durch das Vektorsuchmodul (33) erfasst wird, wenn der erfasste Bewegungsvektor größer ist als der Grenzwert, der von dem Grenzwert-Berechnungsmodul (32) berechnet wird.

2. Vorrichtung nach Anspruch 1, wobei das Grenzwert-Berechnungsmodul (32) den Grenzwert als eine Funktion der Zahl n von Bewegungsblöcken in einer Spanne von erster Schwellenwert (th1) < n < zweiter Schwellenwert (th2) berechnet.

3. Bewegungsschätzungsvorrichtung nach Anspruch 2, wobei das Grenzwert-Berechnungsmodul (32) die Funktion so berechnet, dass sie:
eine Ausgabe jedes Bewegungsvektors verbietet, wenn n eine Beziehung n <= th1 erfüllt; und
eine Ausgabe jedes Bewegungsvektors erlaubt, wenn n eine Beziehung n <= th2 erfüllt.

4. Vorrichtung nach Anspruch 2, wobei die Funktion eine lineare Funktion von n ist.

5. Vorrichtung nach Anspruch 2, wobei die Funktion eine nichtlineare Funktion von n ist.

6. Vorrichtung nach Anspruch 5, wobei die Funktion eine Treppenfunktion von n ist.

7. Vorrichtung nach Anspruch 1, ferner umfassend:
ein Interpolationsbild-Erzeugungsmodul (60), das ein Interpolationsbild erzeugt, das zwischen den Bildern eingefügt werden soll, basierend auf dem Bewegungsvektor, der von dem Begrenzungsmodul (34) ausgegeben wird; und
eine Bildanzeigevorrichtung (200), die ein Videobild anzeigt, basierend auf einem Ausgabebildsignal, welches das Interpolationsbild enthält, das von dem Interpolationsbild-Erzeugungsmodul erzeugt wird.

8. Vorrichtung nach Anspruch 1, ferner umfassend:
ein Vektorsuchbereichs-Einstellmodul (39), das in den Bildern einen Suchbereich einstellt, der verwendet werden soll, wenn das Vektorsuchmodul (33) nach einem Bewegungsvektor sucht; und
ein Vektorsuchbereichs-Berechnungsmodul (38), das den Suchbereich für das Vektorsuchbereichs-Einstellmodul (39) berechnet, basierend auf der Zahl von Bewegungsblöcken, die von dem Bewegungsblock-Erfassungsmodul erfasst werden.

9. Verfahren zum Schätzen einer Bewegung eines Objekts, das in Bildern enthalten ist, wobei das Verfahren umfasst:
ein Suchen nach Bewegungsvektoren, die zum Schätzen der Bewegung eines Objekts verwendet werden sollen, das in einem derzeitigen und einem vorherigen Bild enthalten ist, basierend auf Ähnlichkeiten zwischen Pixelblöcken enthalten in den Bildern, wobei jedes der Bilder eines aus einem Bild-Frame und einem Bild-Feld ist;
ein Erfassen der Zahl von Bewegungsblöcken in den Pixelblöcken basierend auf den Ähnlichkeiten zwischen den Pixelblöcken in den Bildern;
ein Berechnen eines Grenzwerts, so dass sich dieser erhöht, wenn sich die Zahl der Bewegungsblöcke, die von dem Bewegungsblock-Erfassungsschritt erfasst werden, erhöht; und
ein Verbieten der Ausgabe des Bewegungsvektors, der von dem Vektorsuchschritt erfasst wird, wenn der erfasste Bewegungsvektor größer als der berechnete Grenzwert ist.

## Revendications

1. Dispositif d'estimation de mouvement comprenant :
un module de recherche de vecteur (33) qui recherche des vecteurs de mouvement à utiliser pour estimer un mouvement d'un objet inclus dans une image actuelle et une image précédente sur la base de similarités entre des blocs de pixels inclus dans les images, chacune desdites images étant l'un d'une trame d'image et d'un champ d'image ;
un module de détection de bloc de mouvement (31) qui détecte le nombre de blocs de mouvement dans les blocs de pixels sur la base des similarités entre les blocs de pixels desdites images ;
un module de calcul de valeur limite (32) qui calcule une valeur limite de sorte qu'elle augmente alors que le nombre de blocs de mouvement détectés par le module de détection de bloc de mouvement augmente ; et
un module de limitation (34) qui empêche la sortie du vecteur de mouvement détecté par le module de recherche de vecteur (33) lorsque le vecteur de mouvement détecté est supérieur à la valeur limite calculée par le module de calcul de valeur limite (32).

2. Dispositif selon la revendication 1, dans lequel le module de calcul de valeur limite (32) calcule la valeur limite en tant que fonction du nombre n de blocs de mouvement dans une plage d'une première valeur de seuil (th1) < n < deuxième valeur de seuil (th2).

3. Dispositif d'estimation de mouvement selon la revendication 2, dans lequel le module de calcul de valeur limite (32) calcule la fonction de sorte qu'elle :
empêche la sortie de chaque vecteur de mouvement lorsque n satisfait à une relation n ≤ th1, et
permet la sortie de chaque vecteur de mouvement lorsque n satisfait à une relation n ≤ th2.

4. Dispositif selon la revendication 2, dans lequel la fonction est une fonction linéaire de n.

5. Dispositif selon la revendication 2, dans lequel la fonction est une fonction non linéaire de n.

6. Dispositif selon la revendication 5, dans lequel la fonction est une fonction échelon de n.

7. Dispositif selon la revendication 1, comprenant en outre :
un module de génération d'image d'interpolation (60) qui génère une image d'interpolation à insérer entre les images sur la base du vecteur de mouvement qui est délivré par le module de limitation (34) ; et
un dispositif d'affichage d'image (200) qui affiche une image vidéo sur la base d'un signal d'image de sortie qui comprend l'image d'interpolation générée par le module de génération d'image d'interpolation.

8. Dispositif selon la revendication 1, comprenant en outre :
un module de détermination de plage de recherche de vecteur (39) qui détermine, dans les images, une plage de recherche à employer lorsque le module de recherche de vecteur (33) recherche un vecteur de mouvement ; et
un module de calcul de plage de recherche de vecteur (38) qui calcule la plage de recherche pour le module de détermination de plage de recherche de vecteur (39) sur la base du nombre de blocs de mouvement détectés par le module de détection de bloc de mouvement.

9. Procédé d'estimation du mouvement d'un objet inclus dans des images, le procédé consistant à :
rechercher des vecteurs de mouvement à utiliser pour estimer le mouvement d'un objet inclus dans une image actuelle et une image précédente sur la base de similarités entre des blocs de pixels inclus dans les images, chacune desdites images étant l'un d'une trame d'image et d'un champ d'image ;
détecter le nombre de blocs de mouvement dans les blocs de pixels sur la base des similarités entre les blocs de pixels dans les images ;
calculer une valeur limite de sorte qu'elle augmente alors que le nombre des blocs de mouvement détectés par l'étape de détection de bloc de mouvement augmente ; et
empêcher la sortie du vecteur de mouvement détecté par l'étape de recherche de vecteur lorsque le vecteur de mouvement détecté est supérieur à la valeur limite calculée.
